Europäisches Patentamt

European Patent Office

Office européen des brevets

(19)

(11) Veröffentlichungsnummer : **0 039 760**
**B1**

(12) **EUROPÄISCHE PATENTSCHRIFT**

(45) Veröffentlichungstag der Patentschrift :
13.06.84

(21) Anmeldenummer : **81100797.0**

(22) Anmeldetag : **05.02.81**

(51) Int. Cl.³ : **G 03 B 21/56**

(54) **Vorrichtung zur Verwirklichung eines Hintergrundes für zu fotografierende Gegenstände.**

(30) Priorität : **08.05.80 IT 2189480**

(43) Veröffentlichungstag der Anmeldung :
**18.11.81 Patentblatt 81/46**

(45) Bekanntmachung des Hinweises auf die Patenterteilung : **13.06.84 Patentblatt 84/24**

(84) Benannte Vertragsstaaten :
**AT BE CH DE FR GB LI NL SE**

(56) Entgegenhaltungen :
**CH-A-    99 783**
**DE-A- 2 550 377**
**GB-A- 1 336 554**
**US-A-    596 312**
**US-A-    641 947**
**US-A- 2 996 954**
**US-A- 3 587 183**

(73) Patentinhaber : **Russotti, Enzo**
**Via Giovanni Cantoni, 6**
**I-20100 Mailand (IT)**

(72) Erfinder : **Russotti, Enzo**
**Via Giovanni Cantoni, 6**
**I-20100 Mailand (IT)**

(74) Vertreter : **Dr. Ing. A. Racheli & C.**
**Viale San Michele del Carso, 4**
**I-20144 Milano (IT)**

EP 0 039 760 B1

Jouve, 18, rue St-Denis, 75001 Paris, France

## Beschreibung

Die vorliegende Erfindung betrifft eine Vorrichtung zur Verwirklichung eines Hintergrundes bei fotografischen Aufnahmen, beispielsweise zur Verwirklichung von Fotografien « gedeckter » Art oder eines durchgehenden Hintergrundes zusammen mit einem zu fotografierenden Gegenstand.

Bisher wurde zu diesem Zweck eine Vorrichtung mit einer einteiligen Hintergrundscheibe und einem Trägerrahmen aus Ständern und steifen Traversen verwendet. Dieser platzraubende Rahmen stützt eine durchscheinende Mattglasscheibe oder Plexiglasscheibe ab, auf deren unteren Teil der zu fotografierende Gegenstand abgesetzt wird.

Der grösste Nachteil der Vorrichtung dieser Art besteht in einem grossen Platzbedarf und somit im Zeitverlust für die Montage und entsprechende Demontage der Vorrichtung, sofern sie nach Gebrauch wieder weggeräumt werden muss.

Die vorliegende Erfindung hat sich deshalb zur Aufgabe gemacht, diesen Nachteil zu beseitigen und eine Vorrichtung zur. Verwirklichung eines Hintergrundes zu schaffen, die nach Gebrauch bequem so zusammengelegt werden kann, dass ihre Tiefenabmessung nur noch wenige Zentimeter beträgt.

Die Aufgabe wurde durch die in Anspruch 1 gekennzeichnete Vorrichtung gelöst, während die in den Ansprüchen 2 bis 6 gekennzeichneten Merkmale weitere Verbesserungen darstellen.

Die erfindungsgemässe Vorrichtung wird nachstehend anhand eines in den beigefügten Zeichnungen dargestellten Beispiels beschrieben. Es zeigen :

Figur 1 eine Seitenansicht der Vorrichtung in geöffneter Stellung, d. h. gebrauchsbereit,

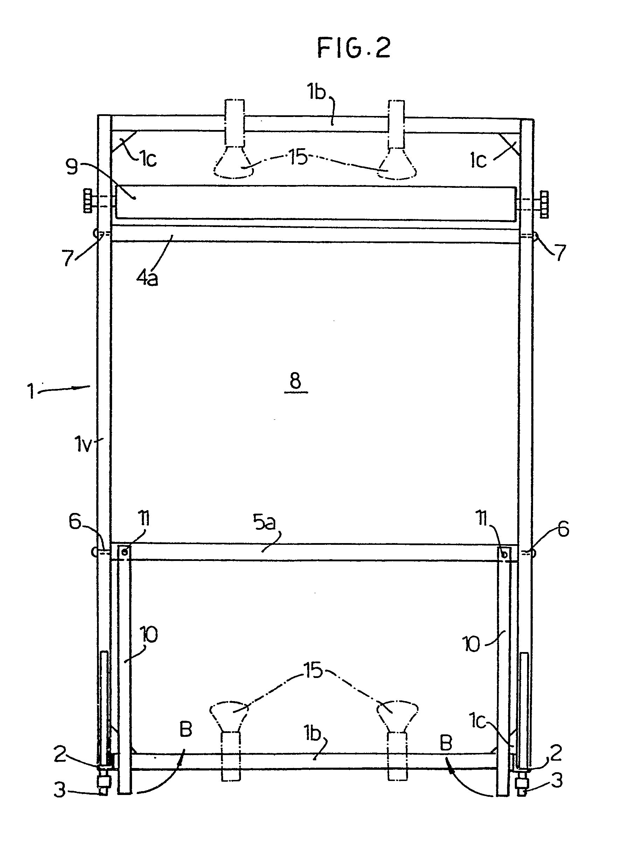

Figur 2 eine Vorderansicht der in Fig. 1 dargestellten offenen, gebrauchsbereiten Vorrichtung,

Figur 3 eine Seitenansicht der geschlossenen, abstellbereiten Vorrichtung.

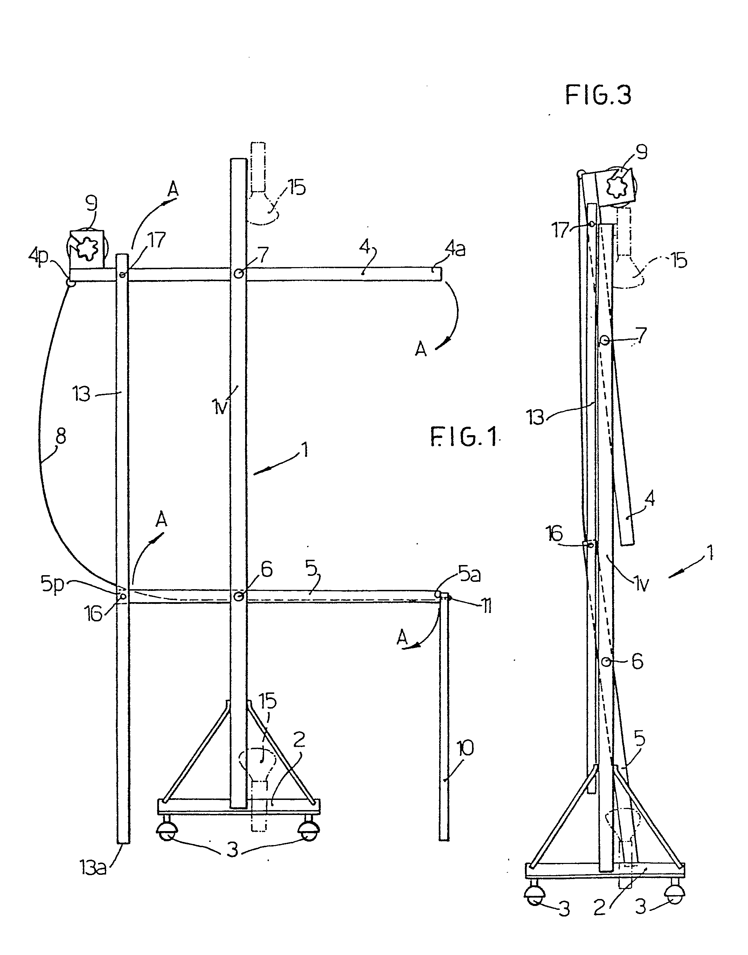

Die in der beigefügten Zeichnung dargestellte Vorrichtung mit einer durchgehenden, biegsamen, durchscheinenden Scheibe, beispielsweise aus Plexiglas, zum Verwirklichen eines Hintergrundes zum Fotografieren von Gegenständen umfasst einen steifen rechteckigen Rahmen 1, der aus zwei senkrechten Teilen 1v und zwei waagrechten Teilen 1b besteht, die durch Eckbleche 1c miteinander verbunden sind, wobei das Ganze auf ein mit Rollen 3 versehenes Untergestell 2 montiert ist. An den senkrechten Teilen 1v des festen Rahmens 1 sind in 6 und 7 zwei übereinanderliegende bewegliche Rahmen 4 und 5 angelenkt. Die beweglichen Rahmen 4 und 5 sind in der Nähe ihrer rückwärtigen Enden 4p und 5p an den Punkten 16 und 17 mit zwei zu beiden Seiten der Rahmen 4 und 5 senkrecht verlaufenden Ständern 13 gelenkig verbunden. Die Ständer 13 stützen sich bei waagrechter Lage der Rahmen 4 und 5 mit ihrem unteren Ende 13a unmittelbar auf dem Fussboden ab. Am hinteren Rand 4p des beweglichen Rahmens 4 ist die Plexiglasscheibe 8 mit Haken und drehbaren Ringen so befestigt, dass sie sich — wie in Fig. 1 dargestellt — frei von Einspannkräften biegen kann.

Da die Plexiglasscheibe sich im Bereich des Rahmens 5 beim Fotografieren auch eines schweren Gegenstandes nicht durchbiegen darf, ist sie durch Befestigung am vorderen Rand 5a und seitlich im Rahmen 5 eingespannt.

Am oberen und am unteren Ende des festen Rahmens 1 ist eine Beleuchtungsanlage bekannter Art angeordnet, die in der Zeichnung mit 15 angegeben ist.

Am vorderen Rand 5a des unteren beweglichen Rahmens 5 können zwei in 11 angelenkte Stützfüsse 10 montiert werden, die in Pfeilrichtung B umgelegt werden können. Am hinteren Ende des oberen beweglichen Rahmens 4 ist eine Abwickelvorrichtung 9 befestigt, die eine abwickelbare Rolle für farbige Hintergründe trägt.

Aus der vorstehenden Beschreibung ist zu entnehmen, dass die beiden beweglichen Rahmen 4 und 5 in Pfeilrichtung A geschwenkt und bei Nichtgebrauch in eine Stellung mit geringerem Platzbedarf gebracht werden können, was in Fig. 3 dargestellt ist. Selbstverständlich müssen bei Vorhandensein der beiden Stützfüsse 10 diese zuvor in Pfeilrichtung B umgelegt werden.

## Ansprüche

1. Vorrichtung zur Verwirklichung eines Hintergrundes bei fotografischen Aufnahmen, mit einem Trägerrahmen für eine einteilige, durchscheinende, biegsame Scheibe, dadurch gekennzeichnet, dass der Trägerrahmen einen im wesentlichen senkrechten, auf ein Untergestell (2) montierten festen Rahmen (1) umfasst, an dem übereinanderliegend zwei bewegliche Rahmen (4 und 5) um waagrechte parallele Achsen schwenkbar an Scharnierpaaren (6 und 7) angelenkt sind, die auf den senkrechten Seiten des festen Rahmens (1) angeordnet sind, sowie zwei in der Nähe der hinteren Enden (4p und 5p) der beweglichen Rahmen (4 und 5) angelenkte senkrechte Ständer (13), wodurch zwei Parallelogramm-Gelenkvierecke verwirklicht werden, und dass die Hintergrundscheibe (8) an der vorderen Seite (5a) des unteren beweglichen Rahmens (5) und der hinteren Seite (4p) des oberen beweglichen Rahmens (4) befestigt ist.

2. Vorrichtung nach Anspruch 1, dadurch gekennzeichnet, dass das Untergestell (2) mit Rädern (3) ausgestattet ist.

3. Vorrichtung nach Anspruch 1 und 2, dadurch gekennzeichnet, dass der obere bewegliche Rahmen (4) vorne über den unteren beweglichen Rahmen (5) verlängert ist, um eine Überdachung zu verwirklichen, auf der ein lichtstreuendes Mittel, beispielsweise ein Nylongewebe, angeordnet werden kann.

4. Vorrichtung nach einem der vorstehenden Ansprüche, dadurch gekennzeichnet, dass eine Abwickelvorrichtung (9) für einen Wickel aus farbigem Material vorgesehen ist, die nahe der hinteren Seite (4p) des oberen beweglichen Rahmens (4) angebracht ist.

5. Vorrichtung nach einem der vorstehenden Ansprüche, dadurch gekennzeichnet, dass der vordere Rand (5a) des unteren beweglichen Rahmens (5) mit angelenkten Stützfüssen (10) versehen ist.

6. Vorrichtung nach einem der vorstehenden Ansprüche, dadurch gekennzeichnet, dass eine oder mehrere Beleuchtungsgruppen (15) vorgesehen sind, die am oberen und/oder unteren Ende des festen Rahmens (1) angeordnet sind.

## Claims

1. A device to realize a background for photos with a support for a continuous, translucent, flexible plate, characterized in that the support comprises a substantially vertical fixed frame (1) which is mounted on a base (2), two superimposed movables frames (4 and 5) being hinged to said frame, both frames rotating around horizontal parallel axes by means of pairs of hinges (6 and 7) provided on the vertical sides of said fixed frame (1), as well as two vertical uprights (13) hinged near the back ends (4p and 5p) of said mobile frames (4 and 5), so as to make up two articulated parallelograms, the plate of the background (8) being fixed at the front side (5a) of the lower movable frame (5) and at the back side (4p) of the upper movable frame (4).

2. A device according to claim 1, characterized in that the base (2) is provided with wheels (3).

3. A device according to claims 1 and 2, characterized in that the upper movable frame (4) is extended towards the front on the lower movable frame (5), so as to provide a cover on which a diffuser means can be arranged, such as for example a nylon cloth.

4. A device according to any of the preceding claims, characterized in that an unrolling device (9) is provided for roll of coloured material arranged near the back side (4p) of the upper movable frame (4).

5. A device according to any of the preceding claims, characterized in that the front edge (5a) of the lower movable frame (5) is provided with bearing feet (10).

6. A device according to any of the preceding claims, characterized in that one or more lighting units (15) are provided, arranged at the upper and/or at the lower ends of the fixed frame (1).

## Revendications

1. Dispositif pour la réalisation d'un arrière-plan pour photographies avec un support pour une plaque continue translucide flexible, caractérisé en ce que le support comporte un châssis fixe (1) substantiellement vertical, monté sur une base (2), sur ledit châssis étant articulés deux châssis mobiles (4 et 5) superposés et tous les deux tournant autour d'axes horizontaux et parallèles au moyen de paires de charnières (6 et 7) prévues sur les côtés verticaux dudit châssis fixe (1) ainsi que deux montants (13) verticaux articulés à la proximité des extrémités arrière (4p et 5p) desdits châssis mobiles (4 et 5), de façon à réaliser deux parallélogrammes articulés, la plaque de l'arrière-plan (8) étant fixé au côté avant (5a) du châssis mobile inférieur (5) et au côté arrière (4p) du châssis mobile supérieur (4).

2. Dispositif selon la revendication 1, caractérisé en ce que la base (2) est munie de roues (3).

3. Dispositif selon les revendications 1 et 2, caractérisé en ce que le châssis mobile supérieur (4) est prolongé en avant sur le châssis mobile inférieur (5), de façon à créer un petit toit sur lequel un moyen diffusant peut être arrangé, par exemple, une toile de nylon.

4. Dispositif selon n'importe quelle des revendications précédentes, caractérisé en ce qu'on prévoit un dispositif de déroulement (9) pour une matière colorée en rouleau, arrangée en proximité du côté postérieur (4p) du châssis mobile supérieur (4).

5. Dispositif selon n'importe quelle des revendications précédentes, caractérisé en ce que le bord avant (5a) du châssis mobile inférieur (5) est muni de pieds d'appui (10).

6. Dispositif selon n'importe quelle des revendications précédentes, caractérisé en ce qu'on prévoit un ou plusieurs groupes d'éclairage (15) aux extrémités supérieure et/ou inférieure du châssis fixe (1).

FIG.3

FIG.1

# FIG.2